# EUROPÄISCHE PATENTSCHRIFT

(11) **EP 1 590 418 B1**
(45) Veröffentlichungstag und Bekanntmachung des Hinweises auf die Patenterteilung: **14.12.2011**
(21) Anmeldenummer: 03782478.6
(22) Anmeldetag: 23.12.2003
(51) Int. Cl.: C09K 5/06

(54) **LATENTWÄRMESPEICHERMATERIAL UND VERFAHREN ZUR HERSTELLUNG EINES LATENTWÄRMESPEICHERMATERIALS**
PHASE CHANGE TEMPERATURE CONTROLLING MATERIAL AND METHOD FOR THE PRODUCTION THEREOF
MATERIAU REGULATEUR THERMIQUE A CHANGEMENT D'ETAT ET PROCEDE DE PRODUCTION D'UN MATERIAU REGULATEUR THERMIQUE A CHANGEMENT D'ETAT

(30) Priorität: 02.01.2003 DE 10300300; 24.03.2003 DE 10313101
(43) Veröffentlichungstag der Anmeldung: 02.11.2005
(73) Patentinhaber: Rubitherm Technologies GmbH, 12277 Berlin (DE)
(72) Erfinder: FIEBACK, Klaus, 14467 Potsdam (DE); LINDENBERG, Götz, 10405 Berlin (DE)
(74) Vertreter: Müller, Enno
(86) Internationale Anmeldenummer: PCT/EP2003/014791
(87) Internationale Veröffentlichungsnummer: WO 2004/061044

(56) Entgegenhaltungen:
- EP-A- 1 215 259
- WO-A-95/19533
- WO-A-99/41067
- DE-A- 19 813 562
- US-A- 4 561 989
- DATABASE WPI Section Ch, Week 198648 Derwent Publications Ltd., London, GB; Class A93, AN 1986-316295 XP002274124 & JP 61 235482 A (SEKISUI HOUSE KK), 20. Oktober 1986 (1986-10-20) & PATENT ABSTRACTS OF JAPAN & JP 61 235482 A (SEKISUI HOUSE )
- DATABASE WPI Section Ch, Week 198347 Derwent Publications Ltd., London, GB; Class G04, AN 1983-824090 XP002274125 & JP 58 176291 A (NIPPON SYNTHETIC CHEM IND CO), 15. Oktober 1983 (1983-10-15)
- DATABASE WPI Section Ch, Week 199306 Derwent Publications Ltd., London, GB; Class A18, AN 1993-049785 XP002274126 & JP 05 001282 A (MATSUSHITA ELECTRIC WORKS LTD), 8. Januar 1993 (1993-01-08)
- DATABASE WPI Section Ch, Week 199046 Derwent Publications Ltd., London, GB; Class G04, AN 1990-345809 XP002274127 & JP 02 251021 A (MATSUSHITA ELECTRIC WORKS LTD), 8. Oktober 1990 (1990-10-08)

## Beschreibung

Die Erfindung betrifft eine Verwendung eines Latentwärmespeichermaterials nach den Merkmalen des Anspruches 1 und ein Latentwärmespeichermaterial nach den Merkmalen des Anspruches 2.

Weiter betrifft die Erfindung ein Verfahren zur Herstellung eines Latentwärmespeichermaterials auf Basis eines Salzes mit einem Anteil an Paraffin.

Latentwärmespeichermaterialien auf Basis eines Salzes, insbesondere eines Salzyhydrates, sind bereits seit langem bekannt. Gerade bei salzbasierten Latentwärmespeichermaterialien stellt sich allerdings das Problem des Temperaturverzuges beim Verfestigen. Man spricht auch von Unterkühlung. Beim Verfestigen wird bekanntlich eine hohe Wärmemenge bei praktisch konstanter Temperatur abgegeben. Es sind nun bei salzbasierten Latentwärmespeichermaterialien Temperaturunterschiede von 5 bis 10 und manchmal mehr Grad im Vergleich zu der Auslegetemperatur bzw. vorhergesagten Temperatur, bei welcher die Verfestigung eigentlich eintreten sollte, beobachtet worden. Insbesondere für eine Verwendung in der Gebäude- bzw. Raumklimatisierung bedeutet dies angesichts der damit verbundenen Unterschiede in den tatsächlichen Temperaturniveaus beim Ausspeichern von Wärme, dass solche Latentwärmespeichermaterialien nicht anwendbar sind.

Es kommt hinzu, dass paraffinbasierte Latentwärmespeichermaterialien, die in gleicher Weise seit langem bekannt sind, nicht immer den gegebenen Vorschriften, insbesondere gebäudetechnischen Vorschriften (Brandgefahr) genügen können.

Aus der US-PS 5,532,039 ist es bekannt, mit Hilfe von mikroverkapseltem Latenwärmespeichermaterial bei einem zellenartig aufgebauten thermischen Isolierungsbauteil verschiedene Latentwärmespeichermaterialien auch innerhalb derselben Zelle einzusetzen. Hiermit soll die Temperaturspanne in welcher das Isolierungsbauteil thermisch wirksam ist, vergrößert werden. Eine große Temperaturspanne, in welcher ein solches Bauteil wirksam ist, ist aber für viele Anwendungsfälle gerade nicht gewünscht. Jedenfalls dann nicht, wenn bei jedenfalls salzbasiertem Latentwärmespeichermaterial hinzukommt, dass ein nicht vorhersagbarer Temperaturverzug beispielsweise beim Ausspeichern der Wärmeenergie auftreten kann.

Aus der US 4,561,989 ist ein salzbasiertes Latentwärmespeichermaterial bekannt, das einen Lösungsvermittler enthält. Eine Beeinflussung des Latentwärmespeichermaterials dahingehend, dass sich eine andere Verfestigungstemperatur als die Auslege-Verfestigungstemperatur, und dies gezielt, ergibt, ist nicht angesprochen.

Ein salzbasiertes Latentwärmespeichermaterial mit einem Lösungsmittelanteil ist zudem noch aus der EP 1215259 A bekannt. Die Frage einer gezielten Einstellung der Verfestigungstemperatur des Latentwärmespeichermaterials abweichend von der Auslege-Verfestigungstemperatur ist hier ebenfalls nicht angesprochen, schon gar nicht im Zusammenhang mit der Raumklimatisation.

Der Erfindung stellt sich die Aufgabe, eine Verwendung eines salzbasierten Latentwärmespeichermaterials mit einem Paraffinanteil und einem Lösemittelanteil vorteilhaft für die Raumklimatisation anzugeben, bzw. ein solches Latentwärmespeichermaterial zur Verfügung zu stellen.

Diese Aufgabe ist bei den bereits genannten Ansprüchen 1 und 2 gelöst.

Der Anteil an Paraffin ist geringer als der Anteil an Salz und das Paraffin ist homogen in dem Salz verteilt angeordnet. Durch den geringeren Anteil an Paraffin ist gegeben, dass die wesentlich dem Salz zugeordneten Eigenschaften wie beispielsweise eine geringere oder fehlende Brennbarkeit nicht unterdrückt sind. Die homogene Verteilung sorgt vorhersagbar für die gewünschten Eigenschaften in dem Latentwärmespeichermaterial. Überraschend hat sich gezeigt, dass bereits ein relativ geringer Anteil Paraffin in dem salzbasierten Latentwärmespeichermaterial als Keimbildner wirkt und so "Unterkühlungseffekte" beim Verfestigen des Latentwärmespeichermaterials, die wesentlich für die genannten Temperaturunterschiede verantwortlich sind, praktisch nicht aufkommen lässt. Gleiches zeigt sich auch beim Einspeichern von Wärme, also beim Durchlaufen der Aggregatzustände von fest hin zu flüssig. Die Ausspeicherungstemperatur wird sogar stabiler nach Durchlaufen der ersten Zyklen. Das im geschmolzenen Zustand vorliegende Kristallwasser - bei einem Salzhydrat - mit darin befindlichem Paraffin, gegebenenfalls auch mit darin befindlichem Lösungsmittel oder Lösungsvermittler, wie nachstehend noch in weiterer Einzelheit ausgeführt, lagert sich bei Abkühlung bzw. damit einhergehender Verfestigung des Latentwärmespeichermaterials wieder homogen und stabil an das Salzkristall an. Das Paraffin bildet bei jedem Erstarrungsvorgang seine Keimoberfläche neu, was bei dem Salz ebenfalls die sofortige Keimbildung anregt. Sehr vorteilhaft ist auch die bei Paraffin im Zuge des Erstarrens auftretende spürbare Volumenveränderung (Verringerung). Auch diese wirkt auslösend auf die Keimbildung des Salzes. Insofern ist es auch nicht einmal erforderlich, dass das Paraffin unmittelbar, gleichsam "nackt" in dem Salz verteilt ist. Es kann grundsätzlich auch etwa mikroverkapselt im Salz verteilt angeordnet sein. Hinsichtlich Mikroverkapselung wird beispielsweise auf die WO99/41067 oder die US 4,708,812 B1 verwiesen. Weiter auch auf Veröffentlichungen der Firma BASF, zuletzt im Sobic-Fachseminar, 3. Dezember 2003, wobei hier auch auf die Literaturstelle Schossig, P. ; Henning, H.-M.; Raicu, A. "Mikroverkapselte Phasenwechselmaterialien in Wandverbundsystemen" in: 11. Symposium thermische Solarenergie 07.-11. Mai 2001, ISBN 3-934681-14-X verwiesen ist. Es handelt sich grundsätzlich um eine Polymerumhüllung eines Phasenwechselmaterials wie insbesondere Paraffin. Es entstehen Teilchen mit einer Größe von 3-20 µm.

Als weitere Technologie zur Feinverteilung von PCM wie insbesondere Paraffin, zur Erhaltung zunächst eines pulverförmigen Materials, ist auch die Anlagerung an Siliciumteile zu nennen, wie sie etwa aus der US-PS 5,211,949 bekannt ist.

Das Paraffin ist dem salzbasierten Latentwärmespeichermaterial gelöst. In der Regel handelt es sich um eine Emulsion.

Bevorzugt ist es, dass das Paraffin in dem salzbasierten Latentwärmespeichermaterial in einer Form entsprechend einer Lösung vorliegt. In der Regel handelt es sich um eine Emulsion. Bevorzugt wird daher zur Lösungsvermittlung ein Emulgator verwendet. Zusätzlich kann für die Verbesserung des Lösungsverhaltens und gegebenenfalls zur gezielten Gefrierpunkterniedrigung ein ein- oder mehrwertiger Alkohol oder eine andere Substanz, die Hydroxylgruppen enthält (zum Beispiel ein Zucker) bzw. eine Paraffin- und/oder Salzhydrat lösende Substanz (zum Beispiel Harnstoff) eingesetzt werden. Grundsätzlich sind als Lösungsmittel für Paraffin beispielsweise auch Ether und Chloroform bekannt. Überraschend hat sich gezeigt, dass eine Paraffin lösende Substanz wie Harnstoff, die hier im Einzelnen zwischen dem Harnstoff und dem Paraffin ablaufenden Vorgänge werden auch als Einschlussverbindung bezeichnet, den Emulgator auch ersetzen kann. Es ist jedenfalls kein zusätzlicher Emulgator in diesem Fall notwendig. Mit dem Anteil an Lösungsvermittler, insbesondere aber mit einem Anteil an dem genannten Alkohol, läßt sich das Maß der Gefrierpunkterniedrigung steuern. Beispielsweise um gezielt eine Verfestigungstemperatur abweichend von der Auslege-Verfestigungstemperatur eines spezifischen salzbasierten Latentwärmespeichermaterials einzustellen. Dem kommt besondere Bedeutung zu, da bekanntlich salzbasierte Latentwärmespeichermaterialien nur mit Auslegungstemperaturen in vergleichsweise großem Abstand bekannt sind.

Beispielsweise kann ein salzbasiertes Latentwärmespeichermaterial mit einer Auslegetemperatur (Verfestigungstemperatur) von 29°C so schrittweise bzw. sogar annähernd stufenlos auf definierte, in jedem Zyklus wieder erreichte Verfestigungstemperaturen von 28, 27, 26, usw. °C bis hin zu 22, 21 oder gar 20°C auch auf entsprechende Zwischenwerte, eingestellt werden. Der so eingestellte Wert der Verfestigungstemperatur erweist sich dann in der beschriebenen Weise als zyklusstabil.

Als Paraffin wird vorzugsweise solches mit einer gleichen Schmelztemperatur eingesetzt, wie es das Salz, oder die überwiegende Menge des salzbasierten Latentwärmespeichermaterials, aufweist.

Auch ist es vorteilhaft, das salzbasierte Latentwärmespeichermaterial in einem offenporigen Schaumstoff und/oder einer Kapillarräume bietenden Faserstruktur und/oder einer offenporigen Graphitstruktur aufzunehmen.

Eine solche Aufnahme von Latentwärmespeichermaterial ist, mit Ausführungsbeispielen auch betreffend paraffinbasiertes Latentwärmespeichermaterial, bereits beschrieben worden (vgl. etwa WO 98/53264).

Der Paraffinanteil kann beispielsweise zwischen 0,1 und 10 % bezogen auf die Gesamtmasse liegen. Weiter bevorzugt zwischen 0,5 und 5 %, nochmals weiter bevorzugt zwischen 0,5 und 3 % und darüber hinaus bevorzugt zwischen 1 % und 2,5 %, wobei sich ein Paraffingehalt von 1,5 oder 2 % auch anbietet. Zusätzlich kann Lösungsmittel und/oder Emulgator vorgesehen sein. Auch die Menge aus Lösungsmittel und/oder Emulgator kann, zusammengefaßt, im Bereich von 0,5 bis 10 % bzw. bzw. bevorzugt in einem der vorstehend bereits für den Paraffingehalt genannten Zwischenwerte liegen. Die Prozentangaben sind jeweils in Prozent der Gesamtmasse zu verstehen. Hierbei ist es möglich, dass die genannten Mengen Paraffin einerseits und Lösungsmittel/Emulgator andererseits etwa zu gleichen Teilen vorgesehen sind. Andererseits kann aber auch die Menge an Lösungsmittel und gegebenenfalls Emulgator deutlich höher sein als der Anteil Paraffin. Je nach verwendetem Salz oder aus sonstigen Aspekten kann allerdings dieser Anteil auch geringer sein.

Hinsichtlich des Aufnahmematerials ist besonders bevorzugt ein offenporiger Schaumstoff wie er durch Melaminharzschaumstoff zur Verfügung gestellt ist. Dieser Schaumstoff ist vollständig offenporig, so dass eine vollständige Tränkung des Schaumstoffs mit dem Latentwärmespeichermaterial ermöglicht ist. Der Schaumstoff ist bevorzugt elastisch rückstellfähig. Grundsätzlich kann aber auch Hartschaumstoff zur Verwendung kommen.

Ein weiteres vorteilhaftes Aufnahmematerial ist durch poröse Graphitmaterialien gegeben wie es beispielsweise unter dem Handelsnamen Sigral der Firma SGL Carbon Group bekannt ist. Es handelt sich um Verbundplatten, die in getränktem Zustand, also im Zustand getränkt mit Latentwärmespeichermaterial, einen Graphitanteil von 10 Volumenprozent, und bis zu 80-90% Latentwärmespeichermaterial (gegebenenfalls auch noch Luftanteile) aufweisen. Auf Graphitbasis ist auch die Herstellung eines Granulats möglich, das auch expandierten Graphitflocken hergestellt ist. Diese Flocken sind dann wiederum mit dem Latentwärmespeichermaterial getränkt.

Es ist auch möglich, dem Latentwärmespeichermaterial noch ein Verdickungsmittel zuzuführen. Hinsichtlich des Verdickungsmittels kann es sich zum Beispiels um ein übliches Thixotropiemittel handeln. Ein konkretes Beispiel ist etwa Polyglycoläther. Höhere Fettsäuren sind auch geeignet. Beispielsweise auch die unter dem Handelsnamen Lamazit der Firma Grünau, Illertissen, bekannte Substanz. Der genannte, bevorzugt zur Unterstützung der Löslichkeit des Paraffins in dem Lösungsmittel eingesetzte Emulgator, oder als Lösungsmittel benutzte Emulgator, kann, durch entsprechende Dosierung, auch als Verdickungsmittel eingesetzt werden. Bei Vorhandensein eines Verdickungsmittels ist der Vorteil gegeben, dass selbst im erwärmten Zustand, in welchem üblicherweise eine Verflüssigung des Latentwärmespeichermaterials gegeben ist, dann noch eine Schwerflüssigkeit, im Sinne einer gallertartigen Konsistenz, gegeben ist. Etwa in Randbereichen oder bei einem unbeabsichtigten Durchtrennen eines solchen Latentwärmespeicherkörpers kommt es noch nicht oder nicht in wesentlichem Ausmaß zu einem Auslaufen von Latentwärmespeichermaterial.

Als Aufnahmematerial, in welches das Latentwärmespeichermaterial eingebunden wird, kommen auch organische Materialien wie Kunststoff oder Cellulose in Frage. Hierbei kann das Aufnahmematerial eine eigene Kapillarität aufweisen oder durch Zusammenfügen von kleinen Aufnahmematerialteilchen zwischen den Teilchen geschaffene Kapillarräume zur Verfügung stellen. Als Paraffin kommen bevorzugt Produkte zum Einsatz, die einen möglichst hohen N-Paraffin-Gehalt besitzen und eine präzise Einstellung des Erstrarrungspunktes ermöglichen, wie z.B. die RUBITHERM RT-Produkte. Besonders bevorzugt ist ein n-Paraffin-Gehalt von > 80 %.

Das Latentwärmespeichermaterial wird bevorzugt wie folgt hergestellt: Zuerst wird das Salz mit dem zugehörigen Wasseranteil vermischt. Daraufhin wird bei Temperaturen, die um 10-60K über dem Erstarrungspunkt des Gemisches liegen, in die als Flüssigkeit vorliegende Salzhydrat-Masse, in beliebiger Reihenfolge Paraffin, Lösungsmittel und Emulgator dazugegeben. Die Vermischung wird im flüssigen Zustand durchgeführt. Beispielsweise durch kräftiges Rühren. Etwa ¼ bis 1 h, in der Regel reicht ½ Stunde aus. Es ergibt sich dann eine ölige Flüssigkeit höhere Viskosität.

Das Paraffin liegt sodann in fein dispergierter Form bezüglich des Salzes vor.

Bei der bevorzugten weiteren Einbringung in Schaumstoff, etwa den genannten offenporigen Melaminharzschaumstoff, wird diese Einbringung sodann durch Einwalzen beispielsweise vorgenommen. Der Schaumstoff wird gequetscht und mit dem gequetschten Schaumstoff wird das flüssige Salz-/Paraffingemisch in Kontakt gebracht. Im Zuge seiner elastischen Rückstellung saugt sich der Schaumstoff dann voll. Alternativ kann das flüssige Gemisch auch durch Unterdruck oder Überdruck in dem beispielsweise als Schaumstoff ausgebildeten Träger eingebracht werden.

Der genannte Emulgator wirkt gegebenenfalls auch noch zusätzlich zu dem Lösungsmittel gefrierpunkterniedrigend.

Das hier beschriebene Latentwärmespeichermaterial ist mit dem überraschenden Effekt verbunden, dass nach Erreichen der Verfestigungstemperatur das Latentwärmespeichermaterial noch nicht hart ist, sondern eine etwa butterartige Konsistenz aufweist. Diese butterartige Konsistenz hält etwa über einen Temperaturbereich von 5°C an. Wenn beispielsweise die Verfestigungstemperatur des Latentwärmespeichermaterials 22°C ist, kann man bis hinunter zu 16,17°C eine butterartige Konsistenz, entsprechend harter Butter beobachten. Bei Temperaturen darunter stellt sich eine Härte ein, wie sie auch ein sonstiges salzbasiertes Latentwärmespeichermaterial nach Unterschreiten der Verfestigungstemperatur aufweist. Allerdings auch nicht schlagartig, sondern etwa in einem Übergang, bei dem genannten Beispiel, bis hin etwa zu 10°C.

Bei Einbringen des Latentwärmespeichermaterials in die feinen Poren eines offenporigen Schaumstoffs, wie etwa den genannten Melaminharzschaumstoff, ist die genannte butterartige Konsistenz über eine etwas geringere Temperaturspanne zu beobachten. Bei dem genannten Beispiel mit der Verfestigungstemperatur von 22°C etwa bis hin zu 18°C, wobei dann ab etwa 12°C, 13°C die Härte eines üblichen verfestigten salzbasierten Latentwärmespeichermaterials gegeben ist.

So gebildetes Latentwärmespeichermaterial wird bevorzugt noch in eine Folie, insbesondere dampfdiffusionsdichte Folie, eingeschweißt. Dies, um dem Verlust von Wasser durch Verdunsten oder der Aufnahme von Wasser durch hygroskopische Effekte entgegenzuwirken.

Insbesondere kann eine solche Folie auch durch Siegelung oder Verschweißung, gegen sich selbst, verbunden sein. Es ist bevorzugt, eine breitere Verbindungsnaht herzustellen, um tatsächlich Diffusionen ausschließen zu können.

Bei einigen Salzhydraten kann es wichtig, die Menge des Wasseranteiles auf +/-2% genau einzustellen, um weitere keimfördernde Effekte für die Verhinderung von Unterkühlungseffekten zu erhalten. Durch eine solcherart gezielt eingestellte "Wasserverknappung" werden schon oberhalb der Erstarrungstemperatur des nächst wasserärmeren Salzhydrates gebildet, die dann in der Praxis zu noch höherem Gebrauchskomfort führen. (Beispielsweise kann statt CaCl2*6H2O eine Stöchiometrie von CaCl2*5,75H2O eingestellt werden.)

Auch diese Keime werden durch die hochviskose Emulsion gleichmäßig im Volumen verteilt.

Durch Zugabe des Paraffins zu dem Salz wird eine kontrollierte sehr feine, dichtgepackte Kristallstruktur erreicht (kleine Kristalle mit wenig Zwischenraum). Daraus folgt eine sehr geringe Volumenänderung beim Phasenwandel, praktisch tritt nur die Volumenänderung des Wassers bei der diesbezüglichen Temperaturänderung auf. Dies ist etwa wichtig für wärmetechnische Anwendungen. Diese Beeinflussung der Kristallstruktur durch das fein verteilt vorhandene Paraffin wird bei Einlagerung in einen Schaumstoff, wie beschrieben, noch zusätzlich unterstützt.

### Beispiele:

1.
   Zu 1 Mol CaCl2*6H2O werden zudem 0,5 Mol C2H5OH hinzugegeben. Dazu etwa 5 Gramm eines Gemisches aus Toluol, Aceton, einem Emulgator und Paraffin mit der Schmelztemperatur 20°. Die so erhaltene Lösung erstarrt bei etwa 22° C.
2.
   Zu 100 Masseteilen CaCl ₂*6H2O werden 9 Masseteile eines Gemisches aus Paraffin (Erstarrungspunkt 20°C) und einem Emulgator, sowie 7 Masseteilen Ethandiol als Lösungsmittel gegeben. Hierbei stellt sich ebenfalls ein Erstarrungspunkt von 22°C ein.
3.
   Zu 100 Masseteilen CaCl ₂*6H₂O werden 9 Masseteile eines Gemisches aus Paraffin mit einem Erstarrungspunkt 30°C und einem Emulgator sowie 2 Masseteilen Ethandiol gegeben. Es stellt sich ein Erstarrungspunkt von ca. 25°C ein.
4. (Vergleichsbeispiel zu Anspruch 2)
   Zu 100 Masseteilen K₃PO₄.7H₂O (Erstarrungspunkt 47°C) werden 9 Masseteile eines Gemisches aus Paraffin (Erstarrungspunkt 54°C) und einem Emulgator, sowie 10 Masseteilen D-Glucose gegeben. Es stellt sich ein Erstarrungspunkt von ca. 41°C ein.
5. (Vergleichsbeispiel zu Anspruch 2)
   Zu dem Salzgemisch aus 60 Masseteilen Na(CH3COO)*3H2O + 40 Masseteilen CO (NH2)2 (Erstarrungspunkt 31°C) werden als Lösungsvermittler weitere 5 Masseteile Harnstoff dazugegeben und anschließend darin 1 Masseteil Paraffin mit einem Erstarrungspunkt von 30°C gelöst. Das resultierende Gemisch behält seinen Erstarrungspunkt von 31°C, verliert aber seine Neigung zu Unterkühlungseffekten.

## Patentansprüche

1. Verwendung eines Latentwärmespeichermaterials auf Basis eines Salzes in der Gebäude- und Raumklimatisation, mit einem Anteil an Paraffin, wobei der Anteil an Paraffin geringer ist als der Anteil an Salz und das Paraffin homogen verteilt in dem Salz angeordnet ist, wobei weiter in dem Latentwärmespeichermaterial ein Lösungsvermittler vorgesehen ist, der zur Einstellung einer Verfestigungstemperatur des Latentwärmespeichermaterials abweichend von der Auslege-Verfestigungstemperatur genutzt ist.

2. Latentwärmespeichermaterial auf Basis eines Salzes, mit einem Anteil an Paraffin, wobei der Anteil an Paraffin geringer ist, als der Anteil an Salz und das Paraffin homogen verteilt in dem Salz angeordnet ist, wobei weiter das Latentwärmespeichermaterial eine Auslege-Verfestigungstemperatur aufweist und in dem Latentwärmespeichermaterial ein Lösungsvermittler vorgesehen ist, **dadurch gekennzeichnet, dass** mit dem Anteil an Lösungsvermittler eine Verfestigungstemperatur des Latentwärmespeichermaferials abweichend von der Auslege-Verfestigungstemperatur im Bereich von 20 bis 28°C eingestellt ist.

3. Verwendung nach Anspruch 1 bzw. Latentwärmespeichermaterial nach Anspruch 2, **dadurch gekennzeichnet, dass** das Salz ein Salzhydrat ist.

4. Verwendung bzw. Latentwärmespeichermaterial nach einem der vorhergehenden Ansprüche, **dadurch gekennzeichnet, dass** der Lösungsvermittler ein Lösungsmittel für Paraffin ist.

5. Verwendung bzw. Latentwärmespeichermaterial nach einem der Ansprüche 1 bis 3, **dadurch gekennzeichnet, dass** der Lösungsvermittler Harnstoff ist.

6. Verwendung bzw. Latentwärmespeichermaterial nach einem der vorhergehenden Ansprüche, **dadurch gekennzeichnet, dass** das Paraffin in gelöster Form vorliegt.

7. Verwendung bzw. Latentwärmespeichermaterial nach einem der vorhergehenden Ansprüche, **dadurch gekennzeichnet, dass** das Paraffin in dem Salz bzw. dem Salzhydrat emulgiert ist.

8. Verwendung bzw. Latentwärmespeichermaterial nach einem der vorhergehenden Ansprüche, **dadurch gekennzeichnet, dass** als Lösungsvermittler ein ein- oder mehrwertiger Alkohol oder eine andere Hydroxylgruppen enthaltende organische Substanz wie zum Beispiel Zucker eingesetzt ist.

9. Verwendung bzw. Latentwärmespeichermaterial nach einem der vorhergehenden Ansprüche, **dadurch gekennzeichnet, dass** das Paraffin mit einer dem Salz entsprechenden Schmelztemperatur eingesetzt wird.

10. Verwendung bzw. Latentwärmespeichermaterial nach einem der vorhergehenden Ansprüche, **dadurch gekennzeichnet, dass** der Paraffinanteil zwischen 0,1 und 10 % bezogen auf die Gesamtmasse liegt.

11. Verwendung bzw. Latentwärmespeichermaterial nach einem der vorhergehenden Ansprüche, **dadurch gekennzeichnet, dass** bezüglich des Salzes ein unterstöchiometrischer Wasseranteil vorhanden ist.

12. Verwendung bzw. Latentwärmespeichermaterial nach Anspruch 11, **dadurch gekennzeichnet, dass** der Wasseranteil 0,5 bis 5% unterhalb des stöchiometrischen Wasseranteiles liegt.

13. Verwendung bzw. Latentwärmespeichermaterial nach einem der Ansprüche 1 bis 10, **dadurch gekennzeichnet, dass** das Latentwärmespeichermaterial einen überstöchiometrischen Wasseranteil enthält.

14. Verwendung bzw. Latentwärmespeichermaterial nach Anspruch 13, **dadurch gekennzeichnet, dass** der Wasseranteil 1 bis 5% oberhalb des stöchiometrischen Wasseranteiles liegt.

15. Verwendung bzw. Latentwärmespeichermaterial nach einem der vorhergehenden Ansprüche, **dadurch gekennzeichnet, dass** das Paraffin mikroverkapselt ist.

## Claims

1. Use of a salt-based phase change material for climate control in buildings and spaces, the material having a paraffin content, the paraffin content being less than the salt content and the paraffin being homogeneously distributed in the salt, a solubilizer also being provided in the phase change material and being used for setting a solidification temperature of the phase change material which is different from the expected solidification temperature of the material.

2. A salt-based phase change material which has a paraffin content, the paraffin content being less than the salt content and the paraffin being homogeneously distributed in the salt, the phase change material also having an expected solidification temperature and a solubilizer being provided in the phase change material, **characterized in that** a solidification temperature of the phase change material is set by the content of solubilizer which is different from the expected solidification temperature of the material by between 20 and 28ºC.

3. Use according to Claim 1 or a phase change material according to Claim 2, **characterized in that** the salt is a salt hydrate.

4. Use or a phase change material according to any of the preceding claims, **characterized in that** the solubilizer is a solvent for paraffin.

5. Use or a phase change material according to any of Claims 1 to 3, **characterized in that** the solubilizer is urea.

6. Use or a phase change material according to any of the preceding claims, **characterized in that** the paraffin is present in dissolved form.

7. Use or a phase change material according to any of the preceding claims, **characterized in that** the paraffin is emulsified in the salt or the salt hydrate.

8. Use or a phase change material according to any of the preceding claims, **characterized in that** a monovalent or polyvalent alcohol or another organic substance containing hydroxyl groups, such as for example sugar, is used as solubilizer.

9. Use or a phase change material according to any of the preceding claims, **characterized in that** paraffin is used that has a melting temperature corresponding to the salt.

10. Use or a phase change material according to any of the preceding claims, **characterized in that** the paraffin content is between 0.1 and 10% with reference to the total mass.

11. Use or a phase change material according to any of the preceding claims, **characterized in that** with respect to the salt, a sub-stoichiometric water content is present.

12. Use or a phase change material according to Claim 11, **characterized in that** the water content is 0.5 to 5% below the stoichiometric water content.

13. Use or a phase change material according to any of Claims 1 to 10, **characterized in that** the phase change material contains a super-stoichiometric water content.

14. Use or a phase change material according to Claim 13, **characterized in that** the water content is 1 to 5% above the stoichiometric water content.

15. Use or a phase change material according to any of the preceding claims, **characterized in that** the paraffin is micro-encapsulated.

## Revendications

1. Utilisation d'un matériau de stockage thermique par chaleur latente sur la base d'un sel dans la climatisation de bâtiments et de locaux, avec une part de paraffine, la part de paraffine étant plus faible que la part de sel et la paraffine étant distribuée de façon homogène dans le sel, un promoteur de dissolution étant prévu en outre dans le matériau de stockage par chaleur latente, lequel est utilisé à ajuster une température de solidification du matériau de stockage par chaleur latente différente de la température de solidification prévue par conception.

2. Matériau de stockage par chaleur latente sur la base d'un sel avec une part de paraffine, la part de paraffine étant plus faible que la part de sel et la paraffine étant distribuée de façon homogène dans le sel, le matériau de stockage par chaleur latente présentant en outre une température de solidification par conception, et un promoteur de dissolution étant prévu dans le matériau de stockage par chaleur latente, **caractérisé en ce qu'**avec la part de promoteur de dissolution est réglée une température de solidification du matériau de stockage par chaleur latente qui diffère de la température de solidification prévue par conception, dans l'intervalle de 20 à 28 °C.

3. Utilisation selon la revendication 1, respectivement matériau de stockage par chaleur latente selon la revendication 2, **caractérisés en ce que** le sel est un hydrate de sel.

4. Utilisation, respectivement matériau de stockage par chaleur latente selon l'une quelconque des revendications précédentes, **caractérisés en ce que** le promoteur de dissolution est un solvant pour la paraffine.

5. Utilisation, respectivement matériau de stockage par chaleur latente selon l'une quelconque des revendications 1 à 3, **caractérisés en ce que** le promoteur de dissolution est de l'urée.

6. Utilisation, respectivement matériau de stockage par chaleur latente selon l'une quelconque des revendications précédentes, **caractérisés en ce que** la paraffine est présente sous forme dissoute.

7. Utilisation, respectivement matériau de stockage par chaleur latente selon l'une quelconque des revendications précédentes, **caractérisés en ce que** la paraffine est émulsionnée dans le sel, respectivement l'hydrate de sel.

8. Utilisation, respectivement matériau de stockage par chaleur latente selon l'une quelconque des revendications précédentes, **caractérisés en ce qu'**un alcool mono- ou polyhydrique ou une substance organique contenant d'autres groupes hydroxyles, comme par exemple du sucre, sont utilisés comme promoteurs de dissolution.

9. Utilisation, respectivement matériau de stockage par chaleur latente selon l'une quelconque des revendications précédentes, **caractérisés en ce que** la paraffine est utilisée avec une température de fusion correspondant au sel.

10. Utilisation, respectivement matériau de stockage par chaleur latente selon l'une quelconque des revendications précédentes, **caractérisés en ce que** la part de paraffine est comprise entre 0,1 et 10 %, rapportée à la masse totale.

11. Utilisation, respectivement matériau de stockage par chaleur latente selon l'une quelconque des revendications précédentes, **caractérisés en ce qu'**en ce qui concerne le sel, il y a une proportion d'eau inférieure à la proportion stoechiométrique.

12. Utilisation, respectivement matériau de stockage par chaleur latente selon la revendication 11, **caractérisés en ce que** la proportion d'eau se trouve de 0,5 à 5 % en dessous de la proportion d'eau stoechiométrique.

13. Utilisation, respectivement matériau de stockage par chaleur latente selon l'une quelconque des revendications 1 à 10, **caractérisés en ce que** le matériau de stockage par chaleur latente contient une proportion d'eau supérieure à la proportion stoechiométrique.

14. Utilisation, respectivement matériau de stockage par chaleur latente selon la revendication 13, **caractérisés en ce que** la proportion d'eau se trouve de 1 à 5 % au-dessus de la proportion d'eau stoechiométrique.

15. Utilisation, respectivement matériau de stockage par chaleur latente selon l'une quelconque des revendications précédentes, **caractérisés en ce que** la paraffine est micro-encapsulée.
